# EUROPEAN PATENT SPECIFICATION

(11) **EP 3 704 317 B1**
(45) Date of publication and mention of the grant of the patent: **21.06.2023**
(21) Application number: 18874971.7
(22) Date of filing: 29.10.2018
(51) Int. Cl.: E03B 7/07, F16L 55/10, F16K 35/00

(54) **A SYSTEM AND A CONTROLLER FOR A RESIDENTIAL WATER SHUT-OFF VALVE**
SYSTEM UND STEUERUNG FÜR EIN ABSPERRVENTIL FÜR BRAUCHWASSER
SYSTÈME ET DISPOSITIF DE COMMANDE POUR UNE SOUPAPE D'ARRÊT D'EAU RÉSIDENTIELLE

(30) Priority: 30.10.2017 FI 20175958
(43) Date of publication of application: 09.09.2020
(73) Proprietor: Automaatio-Center AC OY, 33540 Tampere (FI)
(72) Inventor: LIIMATAINEN, Simo, 33540 Tampere (FI); LEHTONEN, Bjarne, 35300 Orivesi (FI)
(74) Representative: Koivisto, Harri Kristian
(86) International application number: PCT/FI2018/050785
(87) International publication number: WO 2019/086756

(56) References cited:
- US-A- 5 881 755
- US-A1- 2004 226 614
- US-A1- 2010 212 752
- US-B1- 6 209 576
- US-B1- 6 237 618
- US-B1- 6 491 062
- US-B1- 8 857 466

## Description

### BACKGROUND

Accidents, corrosion or malfunctions in a residential water network may cause severe leaks in a residential building. The water shut-off valve is often positioned on a municipal water supply pipe leading to the residential building, often in a basement behind a closed door. In a block of flats, residents are rarely aware of the shut-off valve's location or of the procedure required to shut off the water flow. The residents may call a plumber for help, but he/she may be equally unaware of the shut-off valve's location. For example, a hot water pipe may be broken and cause pressurized hot water to flood the residential building, causing a dangerous situation, wherein the residents may panic and act unexpectedly. Any uncertainty in finding access to the shut-off valve causes more expensive damages as more water enters the building structures by each second.

Repairing the damages includes removing water from the building structure. It may reach cavities or porous materials, such as thermal insulation, wherein the drying process may take a long time, causing difficulties for the residents and additional expenses. The building may be inhabitable during the drying process.

US6209576 B1 discloses an automatic fluid shut-off device for interrupting fluid flow through a fluid supply path in a fluid delivery system.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

The system according to the invention is disclosed in claim 1.

A system and a controller for controlling a residential water shut-off valve are disclosed. A water leak may be quickly stopped by shutting off water flow in a residential building by any resident. A remote signal source may be placed to an easily accessible and reachable position in the residential building. The remote signal source may be an emergency shut-off switch or a manual call point. A controller receives the shut-off signal and causes the shut-off valve to close. The flow of water into the residential building may be stopped quickly.

A circulator pump may be used to circulate hot water in the piping throughout the residential building. Hot water may be used for distributing thermal energy in the building or for regular water consumption. The hot water may be received from a district heating network or it may be heated in a central heating system. The water supply network may refer to any incoming water flow, cold or hot water. The controller may control multiple shut-off valves after receiving the emergency shut-off signal. The residential building may have multiple emergency shut-off switches, for example, at multiple floors on the block of flats, at corridors or at similar positions as fire alarm call points.

Shutting off the water flow may result in difficulties when the shut-off switches are subject to vandalism. Any unwanted activities may be reduced by providing surveillance cameras in the vicinity of the emergency shut-off switch. The camera may reside in the housing of the emergency shut-off switch.

An easily accessible water shut-off mechanism may mitigate or prevent any further damage caused by the water. The installation costs for an emergency shut-off system is marginal compared to the damages caused by flooding water inside a residential building. The time required for drying the residential building may be significantly shortened as the flooding water may be shut off quickly. Many of the attendant features will be more readily appreciated as they become better understood by reference to the following detailed description considered in connection with the accompanying drawings.

### BRIEF DESCRIPTION OF THE DRAWINGS

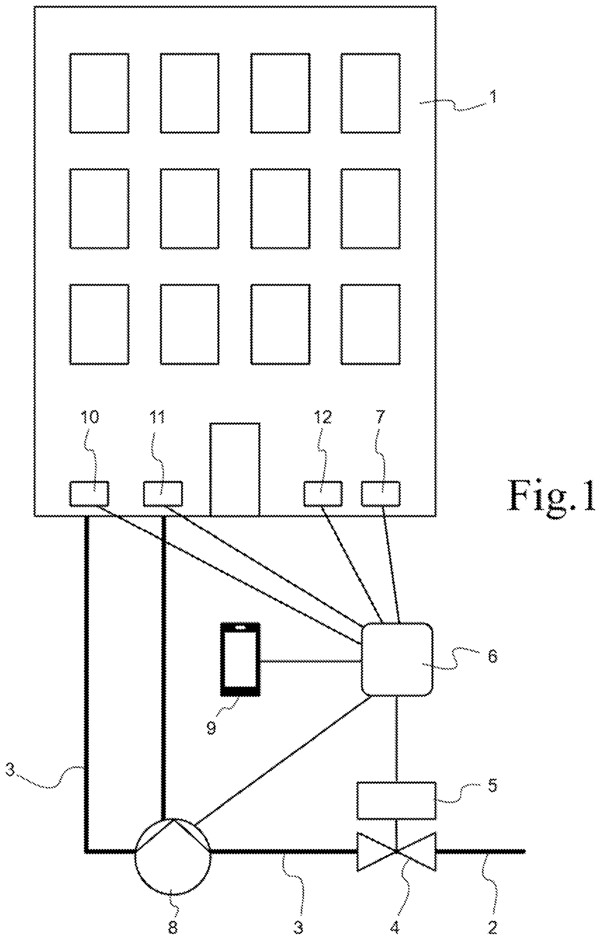

The present description will be better understood from the following detailed description read in light of the accompanying drawings, wherein FIG. 1 illustrates schematically one embodiment according to the system.

Like reference numerals are used to designate like parts in the accompanying drawings.

### DETAILED DESCRIPTION

Although the present embodiments or examples are described and illustrated herein as being implemented as a system in a block of flats, the system described is provided as an example and not a limitation. As those skilled in the art will appreciate, the present examples are suitable for application in a variety of different types of residential buildings and in many commercial buildings.

FIG. 1 illustrates one embodiment having a system configured to a residential building 1. The residential building 1 may refer to a single-family residential building, such as a house. The residential building 1 may contain more than one dwelling unit, being for example, a duplex, an apartment building, a condominium, a semi-detached house or a block of flats. A building is defined herein as a substantial, permanent structure.

Water is distributed to a residential water network 3 of the residential building via a water supply network 2. The water supply network 2 may be a part of municipal water distribution, through underground pipes, providing water pressure to the residential water network 3. The water supply network 2 is maintained at positive pressure to ensure that water reaches all parts of the network and to provide a sufficient flow to every residential water network. The positive pressure also mitigates the risk of unwanted fluids entering the water supply network 2. The residential water network 3 may be maintained at the same positive pressure as the water supply network 2.

A shut-off valve 4 is configured to stop water flow from the water supply network 2 to a residential water network 3. The shut-off valve 4 may reside at the residential building 1. The shut-off valve 4 may be positioned at the connection of the water supply network 2 and the residential water network 3. The interface between the water supply network 2 and the residential water network 3 is a pipe, wherein the shut-off valve may be positioned at a selected position at the interface.

An actuator 5 is configured to operate the shut-off valve 4. In one embodiment, the actuator 5 operates the shut-off valve 4 between an opened position and a closed position. The shut-off valve 4 may stop the water flow to the residential water network 3 quickly or it may be adjusted to operate at moderate speed to mitigate the water hammer effect caused to the residential water network 3. The shut-off valve 4 may be operated manually, for example, during an electric power outage. The actuator 5 may be easily removable from the shut-off valve 4 to enable direct access to the shut-off valve 4. The actuator 5 may comprise a manual lever to enable a testing procedure, wherein the functionality is tested against moving the actuator lever manually. The shut-off valve 4 may be a ball valve, a gate valve, a pinch valve or any other valve suitable for closing the flow of water from a water supply network 2. The actuator 5 may be a linear actuator, a rotary actuator, a pneumatic actuator or a hydraulic actuator.

The actuator 5 is controlled by a controller 6, wherein an electric signal or electric current causes the actuator 5 to operate the shut-off valve 4. The actuator 5 may provide feedback to the controller 6 about its status, whether the shut-off valve 4 is open or closed. The connection between the actuator 5 and the controller 6 may be an electric wire, wherein the controller activates the actuator 5, for example, driving a solenoid in the actuator 5. In one embodiment, the controller 6 comprises simple electronic relays to control external components providing various functions. In one embodiment, the controller 6 comprises control electronics that may comprise at least one processor and a memory storing instructions that, when executed, control at least part of the operation of the system. The controller 6 may comprise discrete logic components providing automated function as a response to an event.

In one embodiment, the controller 6 provides energy to operate the actuator 5. In one embodiment, the controller 6 controls an external energy source to operate the actuator 5. The energy supplied to the actuator may be electric current, hydraulic fluid pressure, or pneumatic pressure. When the control signal is received, the actuator 5 responds by converting the energy into mechanical motion. In one embodiment, the actuator 5 comprises a position indicator and the actuator 5 is configured to send a position information of the shut-off valve 4. The position indicator may be a microswitch arranged to the actuator 5. The microswitch may be in contact with the shut-off valve 4, detecting the position of the shut-off valve 4. The position information may be led to the controller 6 by detecting the microswitch position that corresponds to the emergency shut-off valve 4 position.

A remote signal source, such as an emergency shut-off switch 7, may be positioned in an appropriate location, where the residents have access to it. The emergency shut-off switch 7 is connected to the controller 6, wherein activating the emergency shut-off switch 7 causes the controller 6 to receive the information of the activated shut-off switch 7. Receiving the shut-off signal causes the controller 6 to control the actuator 5 to close the shut-off valve 4.

A circulator pump 8 is configured to the residential water network 3 to provide the water flow of heated water. The heated water may be used to distribute thermal energy in the residential building 1 or it may be used as regular hot tap water. Shutting the shut-off valve 4 does not necessarily stop the water flow in the residential water network 3, as the circulator pump 8 may circulate the water, causing further damage in the residential building 1. The circulator pump 8 may run dry after the shut-off valve 4 has closed the water flow, wherein the circulator pump 8 may overheat or otherwise be damaged from running dry. The controller 6 is configured to shut-off the circulator pump 8 as a response to the shut-off signal received from the emergency shut-off switch 7.

The residential building may comprise multiple incoming water supply networks 2, such as cold water, hot water and/or district heating. Shut-off valves 4 may be configured to shut off each water line, wherein the controller 6 may control simultaneously multiple water networks and multiple shut-off valves 4. In one embodiment, the controller 6 shuts off all residential water networks simultaneously as a response to receiving the emergency shut-off signal. In one embodiment, the system comprises means for managing overheating hot water in the residential water network 3, such as the heating network. When the circulator pump 8 has been stopped due to the emergency shut-off, the temperature in the heating network may exceed 100°C, causing the water to boil. The stagnant water is difficult to control.

The controller 6 is configured to send an alert message to a maintenance person and/or a centralized building maintenance management and dispatch system. The alert message may comprise detailed instructions in order to deal with the situation involving overheated water at the residential water network 3. Each residential building 1 may comprise individual solutions for correcting the situation, wherein the alert message may be stored into the memory at the time of the system installation.

In one embodiment, the emergency shut-off switch 7 acting as the remote signal source is a manual call point for water shut-off. The manual call point may provide similar functionality as a fire alarm. The manual call point may comprise a break-glass function. In one example, the emergency shut-off switch 7 is protected by the glass, wherein the switch may be activated only after breaking the glass. In one example, breaking the glass causes a remote signal to be sent to the controller 6. Breaking the glass may mitigate vandalism, such as false alarms, or it may reduce the risk of accidentally sending an alarm of leaking water.

In one embodiment, the emergency shut-off switch 7 comprises a potential free digital output contact. The digital output information may be transmitted to a centralized building maintenance management and dispatch system, causing the controller 6 to shut off the shut-off valve 4.

In one embodiment, the emergency shut-off switch 7 is equipped with information of the maintenance person responsible for reactivating the water flow. The maintenance person should check any leaks before opening the shut-off switch. The system may generate a digital fingerprint to be archived of the reactivation. In one embodiment, the maintenance person is equipped with a near field communication (NFC) device, such as a smartphone, wherein a NFC tag enables reactivation of the shut-off valve 4.

Vandalism may also be mitigated with one embodiment, comprising a camera 11 configured to capture an image of an area surrounding the emergency shut-off switch 7 as a response to the emergency shut-off switch 7 being activated. The camera 11 may be positioned in a location having a view to the shut-off switch 7 or it may be positioned into the housing of the shut-off switch 7. The controller 6 may control the camera 11 operation or the camera 11 may capture the image as a response to the shut-off switch 7, wherein the shut-off switch may be regarded as a camera shutter button. The captured image may display the person activating the shut-off switch 7. In one embodiment, the image is a fingerprint of a person activating the shut-off switch 7, wherein the person activating the emergency shut-off function must press a finger against a glass surface at the emergency shut-off switch 7. The image may be transmitted to the controller 6. The image may be sent to a cloud computing environment to be stored as evidence.

The system may store various information of the residential water network 3. The data may be collected and logged. The cloud computing environment is one example of an independent information storage system, whereas the information may be stored locally. Examples of information are water consumption, water pressure information at any location, activated shut-off switch 7, image, time stamp or date. The shut-off switch 7 may be activated without any leaks or malfunctions in the residential water network 3. The maintenance person may validate the reason for water shut-off and store the reason to the data storage. When observing for example, the water consumption, valid shut-offs could be separated from any other shut-off switch activation resulting from vandalism or any false alarm. In some situations, the water consumption may be logged against the alarms to further analyse possible problems in the residential water network 3. As an example, when the false alarm data has been marked into the logged data, it may be estimated how much water has escaped to the building structures before the residential water network 3 was shut off.

In one embodiment, a transceiver 9 is connected to the controller 6. The transceiver 9 may be integrated to the controller 6. The transceiver 9 may be a modem configured to communicate with digital communications. The transceiver 9 may comprise functionality to connect to a cellular network and to send messages, such as text-based messages, emails, images or commands to another component within the system or another entity connected to a communication network. The transceiver 9 may be configured to communicate with a communication protocol, such as M-Bus, Modbus, BACnet, RTU or TCP/IP, SMS, 3G, LTE, or as a modem to any cellular network protocol.

The controller 6 is configured to cause the transceiver 9 to send a message as a response to receiving the shut-off signal. In one embodiment, the message is a status message sent as a text message to a mobile phone of a maintenance person responsible for managing the plumbing of the residential building 1. The maintenance person may react immediately and check the situation, locate a possible leak or communicate with the person who made the emergency shut-off for the residential water network 3. The message may be sent to a predefined address, a predefined subscription number or multiple numbers simultaneously. In one embodiment, the controller 6 is configured to light up a signal light as a response to shutting off the shut-off valve 4. The signal light may be positioned in a location easily available to the residents. The signal light may be a red, high-visibility light with an accompanying text indicating the water shut-off.

The residents may discover that the water has been shut off. In one embodiment, the controller 6 is configured to send a message via the transceiver 9 to a digital signage display 10. The residential building 1 may comprise the digital signage display 10 configured to present information about the residential building 1, general messages or maintenance operations. The digital signage display 10 is configured to receive the message from the transceiver 9 and to display a status information of the shut-off valve. The stopped water flow may be displayed as a warning message in the digital signage display 10. The transceiver 9 may send the information as a simple status message, wherein the digital signage display 10 modifies the status information to a suitable format within the interface. A portion of the digital signage display 10 may be reserved for warning messages that override all other forms of communication. The digital signage display 10 may receive, control or modify the information for example, in a HTML format. In one embodiment, the controller 10 sends the status message to a web-based platform, where the residents may receive the information via a web-based application. In one embodiment, the controller 6 sends via the transceiver 9 the status information of the water flow being shut off to mobile phones of multiple residents, maintenance personnel and/or centralized building maintenance management and dispatch system. The web-based application may comprise further information of the residential water network 3, such as consumption data. In one embodiment, the emergency shut-off switch 7 is a software button configured to the web-based application, wherein the application is configured to communicate with the controller 6.

In one embodiment, the digital signage display 10 is configured to display an estimated shut-off period of the shut-off valve 4. The estimated shut-off period may be received for example, from the centralized building maintenance management and dispatch system. The estimated shut-off period may be received from the memory of the controller 6, corresponding to the nominal response time of the maintenance person.

In one embodiment, the controller 6 is configured to monitor the connection to the actuator 5 and to send a message if the connection is interrupted. For example, if the electric wire or a signalling communication between the controller 6 and the actuator 5 is detected as malfunctioning, the controller 6 may send a message to the building maintenance person, so he/she can check whether there is a malfunctioning component. The actuator 5 may be removed from the shut-off switch 4, wherein, as a response, the signal from the actuator 5 to the controller 6 is interrupted and the message may be sent to the relevant party.

In one embodiment, the system comprises a residential water meter configured to send a water consumption information to the controller 6, wherein the controller 6 is configured to shut the shut-off valve 4 as a response to water consumption exceeding a limit value. The limit value may be stored to the memory as a predefined information. The limit value may be calculated by evaluating maximum water flow in normal situations, wherein the excessive water flow may indicate a severe leak in the residential water network 3.

In one embodiment, the system comprises at least one pressure transmitter in the residential water network 3. The pressure transmitter detects the pressure at the resident water network 3 and may be used to verify the leak in the residential water network after it has been shut off. Multiple pressure transmitters may be positioned on both sides of the shut-off valve 4, wherein lack of pressure detected at the water supply network 2 may indicate problem in the water supply network 2. Pressure transmitters may be used to verify a problem in the residential water network 3 and if the emergency shut-off switch has been activated for a valid reason.

In one embodiment, the system comprises a leak detector 12 configured to send a leak information to the controller 6. The detected leak causes the controller 6 to shut the shut-off valve 4 immediately in order to reduce any further damage to the residential building 1.

An aspect discloses a system comprising a shut-off valve configured to stop water flow from a water supply network to a residential water network; an actuator configured to operate the shut-off valve between an opened position and a closed position; a remote signal source configured to send a shut-off signal; and a controller configured to receive the shut-off signal and to control the actuator to close the shut-off valve. The remote signal source is an emergency shut-off switch and the controller is configured to shut-off a circulator pump as a response to the shut-off signal. In an embodiment, the remote signal source is a manual call point for water shut-off. In an embodiment, the controller is configured to cause the transceiver to send a message as a response to receiving the shut-off signal. In an embodiment, the system comprises at least one digital signage display configured to receive a message from the transceiver and to display a status information of the shut-off valve. In an embodiment, the digital signage display is configured to display an estimated shut-off period of the shut-off valve. In an embodiment, the system comprises a camera configured to capture an image of an area surrounding the emergency shut-off switch as a response to the emergency shut-off switch being activated. In an embodiment, the actuator comprises a position indicator and the actuator is configured to send a position information of the shut-off valve. In an embodiment, the controller is configured to monitor the connection to the actuator and to send a message if the connection is interrupted. In an embodiment, the system comprises a residential water meter configured to send a water consumption information to the controller, wherein the controller is configured to shut the shut-off valve as a response to water consumption exceeding a limit value. In an embodiment, the system comprises a leak detector configured to send a leak information to the controller, wherein the controller is configured to shut the shut-off valve as a response to the leak information.

A further example discloses a controller comprising a transceiver configured to be connected to an actuator, wherein the actuator controls a shut-off valve configured to stop water flow from a water supply network to a residential water network; the transceiver being configured to receive a shut-off signal from a remote signal source; wherein the controller is configured to control the actuator to close the shut-off valve as a response to receiving the shut-off signal. The controller is configured to receive the shut-off signal from an emergency shut-off signal from an emergency shut-off switch and shut off a circulator pump as a response to the shut-off signal. In an example, the controller is configured to send a message via the transceiver as a response to receiving the shut-off signal. In an example, the controller is configured to send a message via the transceiver to at least one digital signage display, said message comprising a status information of the shut-off valve or an estimated shut-off period of the shut-off valve. In an example, the controller causes a camera to capture an image of an area surrounding the emergency shut-off switch as a response to the emergency shut-off switch being activated. In an example, the controller is configured to monitor the connection to the actuator and to send a message if the connection is interrupted.

Alternatively, or in addition, the controlling functionality described herein can be performed, at least in part, by one or more hardware components or hardware logic components. An example of the control system described hereinbefore is a computing-based device comprising one or more processors which may be microprocessors, controllers or any other suitable type of processors for processing computer-executable instructions to control the operation of the device in order to control one or more sensors, receive sensor data and use the sensor data. The computer-executable instructions may be provided using any computer-readable media that is accessible by a computing-based device. Computer-readable media may include, for example, computer storage media, such as memory and communications media. Computer storage media, such as memory, includes volatile and non-volatile, removable and non-removable media implemented in any method or technology for storage of information, such as computer-readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer-readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device, it will be appreciated that the storage may be distributed or located remotely and accessed via a network or other communication link, for example, by using a communication interface.

The system, the controller or any device within the system may comprise an input/output controller arranged to output display information to a display device which may be separate from or integral to the system, the controller or any device within the system. The input/output controller is also arranged to receive and process input from one or more devices, such as a user input device (e.g. a mouse, keyboard, camera, microphone or other sensor).

The methods described herein may be performed by software in machine-readable form on a tangible storage medium e.g. in the form of a computer program comprising computer program code means adapted to perform all the steps of any of the methods described herein when the program is run on a computer and where the computer program may be embodied on a computer-readable medium. Examples of tangible storage media include computer storage devices comprising computer-readable media, such as disks, thumb drives, memory etc. and do not only include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

Any range or device value given herein may be extended or altered without losing the effect sought.

## Claims

1. A system, comprising:
a shut-off valve (4) configured to stop water flow from a water supply network (2) to a residential water network (3);
an actuator (5) configured to operate the shut-off valve (4) between an opened position and a closed position;
a remote signal source configured to send a shut-off signal; and
a controller (6) configured to receive the shut-off signal and to control the actuator (5) to close the shut-off valve (4), **characterized in that**:
the remote signal source is a manual call point for water shut-off (7),
wherein;
the manual call point for water shut-off (7) is an emergency shut-off switch, protected by a glass, wherein the switch may be activated only after breaking the glass; and
the controller (6) is configured to shut off a circulator pump (8) as a response to the shut-off signal.

2. A system according to claim 1, wherein it further comprises a transceiver (9), wherein the controller (6) is configured to cause the transceiver (9) to send a message as a response to receiving the shut-off signal.

3. A system according to any of the claim 1 or claim 2, wherein it further comprises at least one digital signage display (10) configured to receive a message from the transceiver (9) and to display a status information of the shut-off valve (4).

4. A system according to claim 3, wherein the digital signage display (10) is configured to display an estimated shut-off period of the shut-off valve (4).

5. A system according to any of the claims 1 to 4, wherein it further comprises a camera configured to capture an image of an area surrounding the manual call point for water shut-off (7) as a response to the manual call point for water shut-off (7) being activated.

6. A system according to any of the claims 1 to 5, wherein the actuator (5) comprises a position indicator and the actuator (5) is configured to send a position information of the shut-off valve (4).

7. A system according to any of the claims 1 to 6, wherein the controller (6) is configured to monitor the connection to the actuator (5) and to send a message if the connection is interrupted.

8. A system according to any of the claims 1 to 7, wherein it further comprises a residential water meter configured to send a water consumption information to the controller (6), wherein the controller (6) is configured to shut the shut-off valve (4) as a response to water consumption exceeding a limit value.

9. A system according to any of the claims 1 to 8 wherein it further comprises a leak detector configured to send a leak information to the controller (6), wherein the controller (6) is configured to shut the shut-off valve (4) as a response to the leak information.

## Patentansprüche

1. System, umfassend:
ein Absperrventil (4), das so konfiguriert ist, dass es den Wasserfluss von einem Wasserversorgungsnetz (2) zu einem Wohnwassernetz (3) stoppt;
einen Aktuator (5), der dazu konfiguriert ist, das Absperrventil (4) zwischen einer geöffneten Position und einer geschlossenen Position zu betätigen;
eine entfernte Signalquelle, die dazu konfiguriert ist, ein Abschaltsignal zu senden; und
eine Steuerung (6), die dazu konfiguriert ist, das Abschaltsignal zu empfangen und den Aktuator (5) zu steuern, um das Absperrventil (4) zu schließen, **dadurch gekennzeichnet, dass**:
die entfernte Signalquelle ein manueller Melder für die Wasserabsperrung (7) ist, wobei;
der manuelle Melder für Wasserabsperrung (7) ein Not-Aus-Schalter ist, der durch ein Glas geschützt ist, wobei der Schalter nur aktiviert werden kann, nachdem das Glas zerbrochen ist; und
die Steuerung (6) dazu konfiguriert ist, als Reaktion auf das Abschaltsignal eine Umwälzpumpe (8) abzuschalten.

2. System nach Anspruch 1, wobei es ferner einen Transceiver (9) umfasst, wobei die Steuerung (6) so konfiguriert ist, dass sie den Transceiver (9) veranlasst, eine Nachricht als Antwort auf den Empfang des Abschaltsignals zu senden.

3. System nach einem der Ansprüche 1 oder 2, wobei es ferner mindestens eine digitale Beschilderungsanzeige (10) umfasst, die konfiguriert ist, um eine Nachricht vom Transceiver (9) zu empfangen und eine Statusinformation des Absperrventils (4) anzuzeigen.

4. System nach Anspruch 3, wobei die digitale Beschilderungsanzeige (10) so konfiguriert ist, dass sie eine geschätzte Abschaltdauer des Absperrventils (4) anzeigt.

5. System nach einem der Ansprüche 1 bis 4, wobei es ferner eine Kamera umfasst, die konfiguriert ist, um ein Bild einer Umgebung des manuellen Melders für die Wasserabsperrung (7) als Reaktion auf die Betätigung des manuellen Melders für Wasserabsperrung (7) aufzunehmen.

6. System nach einem der Ansprüche 1 bis 5, wobei der Aktuator (5) einen Positionsanzeiger umfasst und der Aktuator (5) konfiguriert ist, eine Positionsinformation des Absperrventils (4) zu senden.

7. System nach einem der Ansprüche 1 bis 6, wobei die Steuerung (6) so konfiguriert ist, dass sie die Verbindung zum Aktuator (5) überwacht und eine Nachricht sendet, wenn die Verbindung unterbrochen wird.

8. System nach einem der Ansprüche 1 bis 7, wobei es ferner einen Haushaltswasserzähler umfasst, der so konfiguriert ist, dass er eine Wasserverbrauchsinformation an die Steuerung (6) sendet, wobei die Steuerung (6) so konfiguriert ist, dass sie das Absperrventil (4) als Reaktion darauf schließt, dass der Wasserverbrauch einen Grenzwert überschreitet.

9. System nach einem der Ansprüche 1 bis 8, wobei es ferner einen Leckdetektor umfasst, der dazu konfiguriert ist, eine Leckageinformation an die Steuerung (6) zu senden, wobei die Steuerung (6) konfiguriert ist, als Reaktion auf die Leckageinformation das Absperrventil (4) zu schließen.

## Revendications

1. Système, comprenant :
une soupape d'arrêt (4) conçue pour arrêter un écoulement d'eau depuis un réseau d'alimentation en eau (2) vers un réseau d'eau résidentiel (3) ;
un actionneur (5) conçu pour actionner la soupape d'arrêt (4) entre une position ouverte et une position fermée ;
une source de signal à distance conçue pour envoyer un signal d'arrêt ; et
un dispositif de commande (6) conçu pour recevoir le signal d'arrêt et pour commander l'actionneur (5) afin de fermer la soupape d'arrêt (4), **caractérisé en ce que** :
la source de signal à distance est un déclencheur manuel d'arrêt d'eau (7), dans lequel ;
le déclencheur manuel d'arrêt d'eau (7) est un interrupteur d'arrêt d'urgence, protégé par une vitre, dans lequel l'interrupteur ne peut être activé qu'après avoir brisé la vitre ; et
le dispositif de commande (6) est conçu pour arrêter une pompe de circulation (8) en réponse au signal d'arrêt.

2. Système selon la revendication 1, dans lequel il comprend en outre un émetteur-récepteur (9), dans lequel le dispositif de commande (6) est conçu pour amener l'émetteur-récepteur (9) à envoyer un message en réponse à la réception du signal d'arrêt.

3. Système selon l'une quelconque de la revendication 1 ou de la revendication 2, dans lequel il comprend en outre au moins un affichage de signalisation numérique (10) conçu pour recevoir un message depuis l'émetteur-récepteur (9) et pour afficher des informations d'état de la soupape d'arrêt (4).

4. Système selon la revendication 3, dans lequel l'affichage de signalisation numérique (10) est conçu pour afficher une période d'arrêt estimée de la soupape d'arrêt (4).

5. Système selon l'une quelconque des revendications 1 à 4, dans lequel il comprend en outre une caméra conçue pour capturer une image d'une zone entourant le déclencheur manuel d'arrêt d'eau (7) en réponse à l'activation du déclencheur manuel d'arrêt d'eau (7).

6. Système selon l'une quelconque des revendications 1 à 5, dans lequel l'actionneur (5) comprend un indicateur de position et l'actionneur (5) est conçu pour envoyer des informations de position de la soupape d'arrêt (4).

7. Système selon l'une quelconque des revendications 1 à 6, dans lequel le dispositif de commande (6) est conçu pour surveiller la connexion à l'actionneur (5) et pour envoyer un message si la connexion est interrompue.

8. Système selon l'une quelconque des revendications 1 à 7, dans lequel il comprend en outre un compteur d'eau résidentiel conçu pour envoyer des informations de consommation d'eau au dispositif de commande (6), dans lequel le dispositif de commande (6) est conçu pour fermer la soupape d'arrêt (4) en réponse à une consommation d'eau dépassant une valeur limite.

9. Système selon l'une quelconque des revendications 1 à 8, dans lequel il comprend en outre un détecteur de fuite conçu pour envoyer des informations de fuite au dispositif de commande (6), dans lequel le dispositif de commande (6) est conçu pour fermer la soupape d'arrêt (4) en réponse aux informations de fuite.
